# EUROPEAN PATENT SPECIFICATION

(11) **EP 3 962 405 B1**
(45) Date of publication and mention of the grant of the patent: **05.06.2024**
(21) Application number: 19733112.7
(22) Date of filing: 02.05.2019
(51) Int. Cl.: A61C 8/00, A61F 2/30

(54) **DENTAL IMPLANT AND SURGICAL KIT WITH SAID IMPLANT**
ZAHNIMPLANTAT UND CHIRURGISCHES SET MIT DIESEM IMPLANTAT
IMPLANT DENTAIRE ET KIT CHIRURGICAL AVEC CET IMPLANT

(30) Priority: 30.04.2019 PT 2019115485
(43) Date of publication of application: 09.03.2022
(73) Proprietor: Universidade do Minho, 4704-553 Braga (PT)
(72) Inventor: CORREIA PEREIRA SILVA, Filipe Samuel, 4800-058 Guimarães (PT); SALGADO PINTO, Paulo Filipe, 4800-058 Guimarães (PT); NOVAIS CARVALHO, Óscar Samuel, 4800-058 Guimarães (PT); ALVES DANTAS, Telma Sofia, 4800-058 Guimarães (PT)
(74) Representative: Patentree
(86) International application number: PCT/IB2019/053585
(87) International publication number: WO 2020/222035

(56) References cited:
- EP-A1- 1 133 957
- WO-A1-2013/150369
- US-A1- 2003 065 401
- US-A1- 2017 071 702

## Description

### TECHNICAL FIELD

The present disclosure is in the dental area, more specifically in the area of dental implants.

The dental implant of the present disclosure is arranged to be fixed to the cortical bone and contains a cellular structured surface formed by elevated platforms forming a mesh network of under-channels between the platforms for improved implant lifetime vascularization, surprisingly with capillarity properties.

### BACKGROUND

The conventional dental implant system includes implants and placement of dental implants that rely on screwing the implant within the cortical bone and also the trabecular bone, the mandible and the maxilla. These implants present some limitations, among which is non follow-up of bone recession; the promotion of bone recession due to lack of application of loads in the area adjacent to the implant; the need for long periods of bone osseo-integration before chewing charges may be applied; and, because they need to be screwed the rotation of the implant does not allow the implant to be a single piece that contains the intraosseous and extraosseous zone, nor does it allow the geometry of the intraosseous part of the implant to fit the geometry of the natural cavity or socket of an extracted tooth.

The concept of subgingival implant is not recent. The patent document US 4,702,697 states that a small plaque is placed on the cortical bone and under the gingiva, and moulded to the cortical bone. This plate contains a zone, with a protrusion containing a thread, facing the outside of the gum, where the abutment or crown will be attached. This implant, in order to be solidary with the cortical bone, requires a period of time for bone integration to occur, after which the abutment can be placed and the crown, and chewing charges are applied. Further, as it is placed over the cortical bone there are some issues related to defect of vascularization, to be solved, not provided by the mentioned patent.

The implant of the present disclosure is further distinguished from most of the implants because it does not have a thread for attachment to the bone. Their fixation is obtained by rings or cylinders or other expandable components, coupled in the body of the implant that enters the cavity or socket of the extracted tooth or the hole created in the cortical bone, and by small screws, in the external zone of the bone and internal to the gingiva. This allows the implant to have different geometries, adapted to the anatomy of the bone of each patient, and that the implant's exterior, or crown, may inclusively be anchored in the adjacent teeth, thus increasing the fixation and stiffness of the same.

The method of bone mechanical fixation by expandable components, screw-type bushing, is quite common. The use of materials with shape memory by using the temperature also has some years. Patent document EP1017868 discloses a dental implant which consists of NiTi (Nitinol) and will expand when inside the bone, due to the application of temperature.

Documents US6419491B1 and US 20040000540 A1 disclose dental implants for improved fixation and initial osseo-integration (after the removal of the tooth - first weeks/months). However, the surface described in these documents does not have vascularization functions, necessary mainly when implants are placed over the cortical bone, a type of bone with much less blood than trabecular bone.

Document WO2013150369 discloses a prosthetic element for bone extremities such as fingers or toes, or teeth, comprising a trabecular part with hexagonal patterns and two end parts or stumps.

These facts are disclosed in order to illustrate the technical problem addressed by the present disclosure.

### GENERAL DESCRIPTION

The invention is defined by a dental implant as defined in claim 1. The present disclosure describes a solution that bridges the limitations previously mentioned, because disclose a surface cellular structure with comprising subsurface vascularization functions, which have capillarity properties, able to act during the lifetime of the implant and improving the osteo-regeneration and bone remodeling, necessary for all implants but mainly for those placed in poorly vascularized bone, as is cortical bone.

The present disclosure is distinguished in that small rings, alternately offset, or small cylinders, or small hooks, or components with other geometries but with the same function are placed in the surface of the implant body, in the area of the implant that will enter the cortical bone socket, and will be expanded by the application of temperature, ensuring anchoring from this area of the implant to the cortical bone. This method allows the body of the implant to be in any material, Titanium (Ti), zirconia (YTZP), polyether-ether-ketone (PEEK), or other, and the fasteners and expandable elements are in another material, for example Nitinol.

One aspect included in the present invention describes a dental implant for fitting in an intraosseous zone of a dental socket comprising: a plurality of raised platforms with a flat top such that said tops form an external surface of the implant for contacting with the intraosseous zone and the spaces between said platforms form a network of channels for revascularisation fluid flow. However, network of channels for revascularisation fluid flow, preferably with capillarity properties, able to act during the lifetime of the implant, was not provided so far, and of paramount importance for implants placed in a poorly vascularized bone as is cortical bone.

In one embodiment, the network channels, surprisingly a network with capillarity properties, for fluid flow or vascularization is interconnected all around the surface implant, in contact with bone.

In an embodiment for better results, the external surface is a flat surface elevated from the implant.

In an embodiment for better results, the platforms comprise lateral concave surfaces.

According to the invention for better results, the platforms have a 'T' -shaped cross-section.

In an embodiment for better results, the platforms have a flat top area that is shaped as a triangle, square, rhombus, hexagon, or combinations thereof.

According to the invention for better results, the platforms have a central elevation crowned by a flat top comprising two tabs extending in two opposite directions.

In an embodiment for better results, each said tab has a triangular-shaped, square-shaped, rhombus-shaped, hexagon-shaped, or combinations thereof top surface.

In an embodiment for better results, the channels have a round, oval or rectangular cross-section, providing capillarity functions.

According to the invention for better results, the network of channels is a mesh of channels.

In an embodiment for better results, the space between said platforms is between 0.025 - 0.4 mm.

In an embodiment for better results, the height of the channels varies between 0.05 - 0.8 mm.

In an embodiment for better results, the width of cross-section of the channels varies between 0.05 - 0.8 mm.

In an embodiment for better results, the length of platforms varies between 0.1-1.6 mm.

In an embodiment for better results, the platforms may form a honeycomb structure or a reverse honeycomb structure (i.e a network of channels for fluid flow).

In an embodiment for better results, the dental implant may further comprise an upper part wherein the upper part comprises at least two flaps wherein said flaps comprise holes for housing fastening means.

In an embodiment for better results, the external surface of the flaps, preferably in contact with bone, comprises the network of channels for revascularisation fluid flow.

In an embodiment for better results, the dental implant comprises an internal central hole capable of securing a post and / or a crown.

In an embodiment for better results, the central hole is threaded.

In an embodiment for better results, the dental implant may further comprise a lower part of the implant comprising a conical, frustoconical, frusto-cylindrical shape.

In an embodiment for better results, the lower part of the implant may have the root shape of a tooth or of the bone socket.

In an embodiment for better results, the dental implant may comprise a post for securing the crown.

In an embodiment for better results, the dental implant may comprise a pillar and a crown.

In an embodiment for better results, the dental implant may comprise a plurality of recesses and / or protuberances able to receive expandable components, preferably thermal expandable components.

In an embodiment for better results, the thermally expandable components expand at temperatures between 40-50 ° C.

In an embodiment for better results, the expandable components have a diameter ranging from 0.4-2 mm.

In an embodiment for better results, the expandable components have a height ranging from 1-3 mm.

In an embodiment for better results, the spaces between said platforms is less than 0.4mm.

In an embodiment for better results, the expandable components are of shape memory material, preferably Nitinol.

In an embodiment for better results, the dental implant may comprise an internal central hole capable of securing a post and / or a crown.

In an embodiment for better results, the lower part of the implant has conical, frustoconical, frusto-cylindrical shape.

In an embodiment for better results, the lower part of the implant has the root shape of a tooth or of the bone socket.

In an embodiment for better results, the implant material is selected from the following list: metal material, metal alloy, metal matrix composite, ceramic, ceramic composite, polymer, polymeric composite, or mixtures thereof.

In an embodiment for better results, the metallic material, alloy or metal matrix composite comprises titanium, CoCrMo, stainless steel, or mixtures thereof.

In an embodiment for better results, the ceramic or composite ceramic composition comprises zirconia, alumina, hydroxyapatite, or combinations thereof.

In an embodiment for better results, the polymer or polymeric composite may be selected from materials comprising polyether ether ketone (PEEK), poly (methyl methacrylate) (PMMA) or mixtures thereof.

Dental surgery kit comprising the dental implant described in any one of the preceding claims and expandable components described in the present disclosure.

The present disclosure describes a dental implant, with rigid fixation to the cortical bone, where the implant can be subjected to immediate loading.

In order for this to happen this implant is supported only on the more resistant bone component, the cortical bone, and has a fixation in several points of the cortical bone of the socket.

The present disclosure differs in that the implant here proposed, in addition to the part that is moulded to the external surface of the cortical bone, contains a zone that will enter the natural hole or socket of the tooth that has been extracted, or alternatively in a hole made in the same area, in the cortical bone, and there it will be fixed through rings or cylinders or other expandable components, which ensure a strong and immediate mechanical fixation in this area. In addition, the implant will still be attached to the cortical bone through small screws that will fix the part of the implant on the outside of the bone and subgengival, and that will give greater rigidity to the implant-bone connection. In this way the connection is practically free of relative bone-implant displacement, which allows it to be subjected to immediate chewing loads. This allows the abutment and crown to be applied immediately, or alternatively that the implant has a single body, that is, it already contains the abutment and the crown as a unique part.

In the case of implantation immediately after extraction of the tooth, or sometime after extraction, as long as there is some cavity where the tooth was extracted, the implant will have a component that enters the cavity from where the tooth was extracted, the geometry of the implant zone entering the hole being the closest to the root or bone socket of the extracted tooth, or remaining tooth bone socket. Alternatively, if there is no longer a natural bone cavity, e.g. the tooth has been extracted for a long time, a hole should be drilled only from the thickness of the cortical bone, and the central area of the implant should be inserted in that hole.

In one embodiment, the implant of the present disclosure comprises the following features:
a lower part of the implant that enters the cavity or socket and is internal to the cortical bone, comprises cylindrical holes (13) or semi-circumferential grooves (recesses or circumferential cavities) (15), where expandable components such as small external cylinders or hooks (14), preferably with dimensions between 1 and 4 millimetres (the diameter of which is equal to the holes) or rings (16), respectively, that when subjected to temperatures ranging from 40 to 50 ° C for a period of 5 to 120 seconds, expand and create a strong link between the implant and the cortical bone of the cavity. It is this fixation method that prevents the implant from the need to rotate to enter the hole, that allows it to have any geometry, either the root of the implants, i.e. the part of the implant that will enter the cortical bone socket, or the outer part of the implant, the crown, which can thus be perfectly anchored in adjacent teeth.

In one embodiment, the implant further comprises a flap (1) which will remain superimposed over the cortical bone and under the gingiva. This flap may comprise for example 4 holes in the side zone which will allow screws (5) to secure this flap to the cortical bone and a cellular structure (7) in the region of contact to the cortical bone, in order to accelerate bone-integration and vascularization.

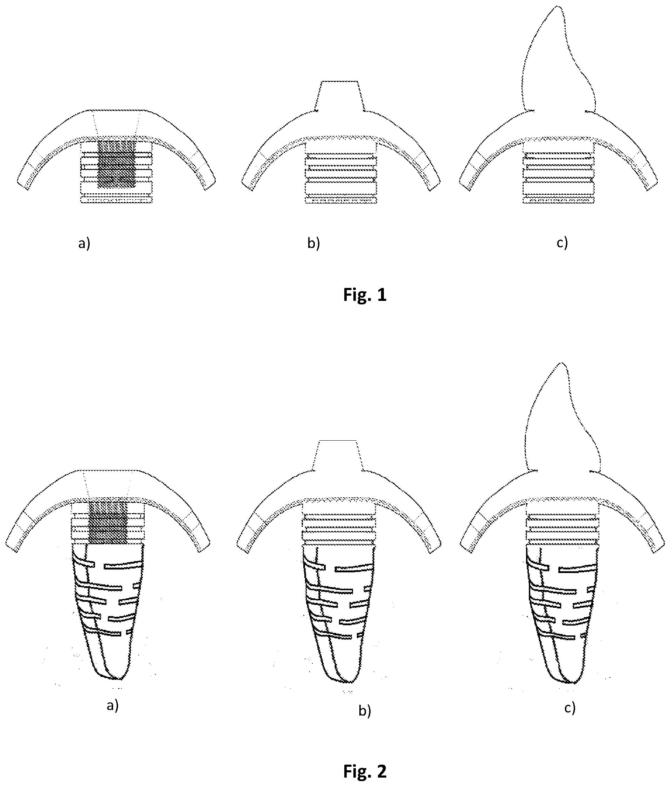

In one embodiment, the implant may be made with a single body (Figure 1c) and Figure 2 c)), which already contains the intraosseous zone, the flap, and the crown area, or be made in two parts (Figure 1 b) and Figure 2 (b)), one, the implant itself, which enters the cortical bone, with the flap, and which already contains the pillar, and on which it will be mounted the other part, the crown, or in three main parts (Figure 1 a) and Figure 2 a)), one, the implant itself, which enters the cortical bone, already with flap, where it will be screwed the other part, the pillar, and on which another part, the crown, will be fixed, and in this last case, that part of the implant that enters the cortical bone, either in the socket of the extracted tooth (Figure 2), either in the hole made in the cortical bone (Figure 1), has a central internal threaded hole (3) where the abutment is screwed.

In one embodiment, the implant, in addition to being generally supported on the cortical bone, in order to maintain a close contact between implant and bone, some fastening bolts by means of screws, which allow it to remain rigidly attached to the bone. This fixation does not allow relative displacements between bone and implant, allowing the immediate application of loads without compromising the osseo-integration of the implant, even with loads of mastication.

] In one embodiment, the implant may further have a cellular structure, in the zone where it is in contact with the bone, allowing effective bone osseo-integration acceleration, including adequate vascularization across the implant surface and over time for as long as the implant is in service, with capillarity properties. This cellular structure must have a geometry that does not jeopardize the holes for the screws.

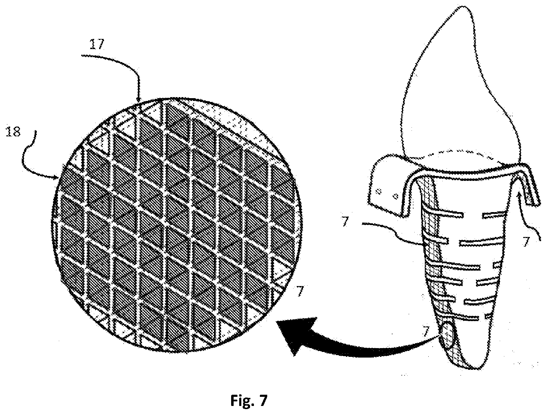

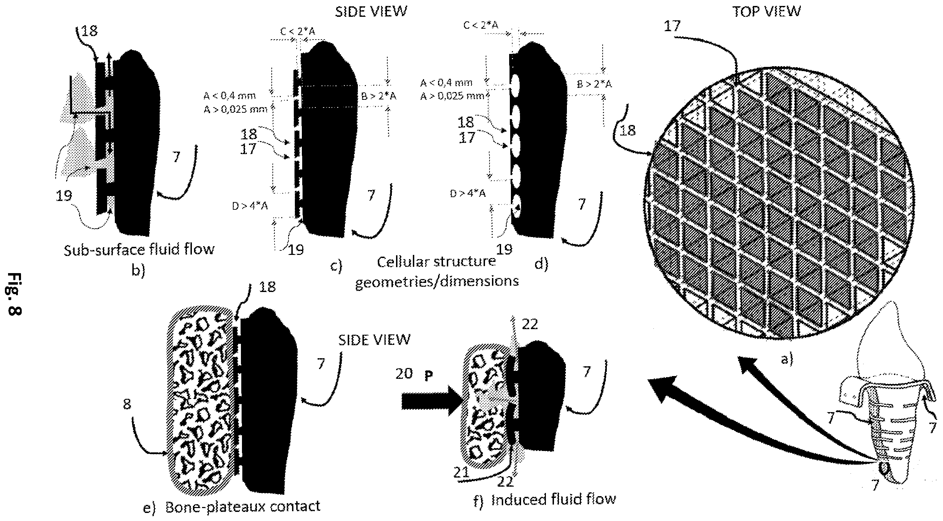

In one embodiment, the cellular structure may be in the form of several platforms surrounded by a network of sub-surface channels, particular for each platform being a square, a hexagon, a pentagon, an octagon, their combinations. In particular as shown in detail in figure 7. This cellular structure geometry or mesh of channels, which does not allow bone to grow inside the sub-surface channels, provides sub-surface vascularization, with capillarity properties, over the implant life period. Further, the platform's flaps deformation, due to chewing forces, induce fluid flow inside the channels thus further promoting vascularization over time, over the lifetime of the implant. In particular as shown in detail in figure 8.

In one embodiment, in terms of materials, the implant or its parts, as well as the accessory screws are metal or metal alloy or metal matrix composites based on titanium or Cobalt-Chromium-Molybdenum Alloy (CoCrMo) or stainless steel or other accepted metal or alloy for medical implants, or by a ceramic such as zirconia, alumina, or other material accepted for medical implants, or ceramic composite, or by a polymer such as PEEK, poly (methyl methacrylate) PMMA, or other polymer accepted in medical implants, or polymeric composite. The other elements, namely the rings or expandable parts, are Ninitol (NiTi) or other expandable material, with shape memory, accepted for medical implants.

In one embodiment, as to the implant manufacturing process (either simple or implants by parts) they will be tailored to the anatomy of each patient. Anatomical images of the bone and tooth will initially be obtained. With these implants should be manufactured containing the flap that will embrace the cortical bone and eventually the crown, in the option of the integrated implant. The manufacturing will be conventional, by CNC machining, laser, or by additive technologies, or other conventional technologies.

In one embodiment, the zone of the implant in contact with the bone will have a cellular structure, which promotes rapid and effective integration with the bone, and allowing adequate vascularization throughout the implant surface and over the implant lifetime.

The dental implant described in the present disclosure has the following advantages:
ability of the implant to have any geometry, either of the zone that enters the bone, and the crown, for not requiring it to rotate in order to be implanted, allowing it to have a geometric freedom that allows it to be anchored on the extracted tooth socket, in the mandible and maxilla, or that the external zone, the crown can have a geometry that allows it to be anchored in adjacent teeth;
ability to stay anchored only in the cortical bone and to be fixed at several points, that is, in the central hole and with, for example, four screws, which allows immediate loading to be applied because there will be no implant- bone relative displacement, and there will be no risk of failure in bone osseo-integration;
ability of the implant to be a single piece, very similar to natural teeth, minimizing the use of various parts with the consequent reduction of mechanical resistance and the probable accumulation of bacteria in the interfaces between parts;
self-adjusting ability between the implant and the bone, in the area of the socket, result of progressive adjustment of the alloy with shape memory, keeping this a contact force with bone, even during some necrosed bone resorption, by virtue of the eventual drilling, when this is required;
ability of the implant geometry to compensate, from the point of view of an eventual bone recession, pre-existing in the mandible / maxilla of the patient, also functioning as a bone graft, thus allowing corrections to the mandible and maxilla geometry to gain the appropriate dimensions, aesthetically, due to placement of the implant;
ability to reduce the probability of peri-implant bone recession over time, e.g. in the area adjacent to the bone, as happens in conventional implants, since the stress distribution is homogeneous over the cortical zone, not allowing zones of stress concentrations, at the edges of the hole, as it happens in conventional implants;
ability to follow the bone recession of the mandible and maxilla, resulting of the patient's age, with no areas of the intra-osseos implant being exposed, as with conventional implants;
ability for adequate implant-bone surface vascularization over the implant life-time as the fluid may flow through the subsurface channels, which have capillarity properties, where bone does not grow, thus avoiding bone loss on implant surface due to deficient bone vascularization, a normal occurrence in implants placed in poorly vascularized bone such as cortical bone.

This is due to the fact that the implant of the present disclosure is set only in the cortical bone, being able to follow the bone recession of the same, and not to be fixed to the cortical and also trabecular bone, as in conventional implants where the area of the implant fixed in the trabecular bone does not allow the implant to follow the cortical bone recession.

In an embodiment, the dimension of the network channel do not allow bone growth inside the network of channels.

In an embodiment, the plateaux flaps deform, under chewing forces, inducing further fluid flow or vascularization along the sub-surface channels.

### BRIEF DESCRIPTION OF THE DRAWINGS

The following figures provide preferred embodiments for illustrating the disclosure and should not be seen as limiting the scope of invention.
Figure 1 - Represents an embodiment of an implant entering a hole performed on the cortical bone. The implant can be made with a single body (c), which already contain the intra-osseous zone and the area of the abutment and the crown, or be made in two parts (b), the implant, which enters the cortical bone and already contains the abutment, on the which part will be mounted, the crown, or else be made in three main parts (a), the implant, which enters the cortical bone and has a hole at its top, where it will be screwed the other part, the abutment, and on which another part, the crown, will be mounted.
Figure 2 - Represents an embodiment of an implant entering the bore socket left by the newly extracted tooth. The implant can be made with a single body (c), which already contains the intraosseous zone and the zone of the pillar and crown, or be made in two main parts (b), the implant, which enters the cortical bone and already contains the pillar, on which will be mounted another part, the crown, or even be made in three parts (a), the implant that enters the cortical bone and that has a hole in its top, where another part, the pillar, will be mounted, and on which another part, the crown, shall be mounted.

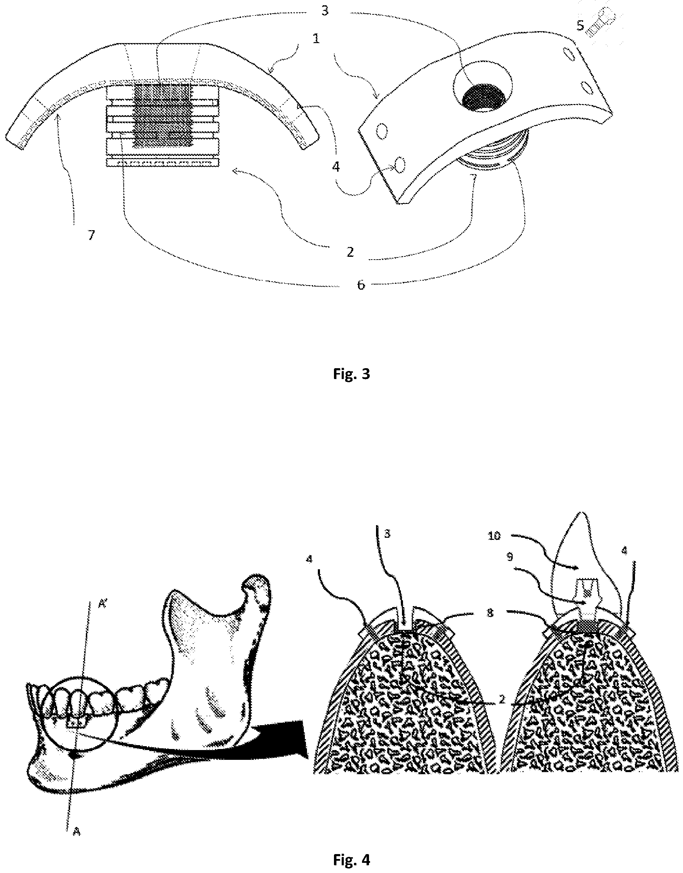

Figure 3 - Represents an embodiment of an implant with flaps (1) with the central part portion (2) to anchor in a hole made in the cortical bone, and with an internal threaded hole (3), at its top, where the abutment will be screwed, where the flaps show holes (4) for insertion of the screws (5), and grooves or holes (6) for the rings or cylinders or hooks with shape memory (14) (16), and further a cellular structure (7).
Figure 4 represents an embodiment of an implant with the central portion (2) anchored in the hole made in the cortical bone (8), with an internal threaded hole (3), at its top, where the pillar (9) is screwed onto, and on which the crown (10) will be mounted. The flaps have several holes (4) for entry of the screws (5) (Figure 3).

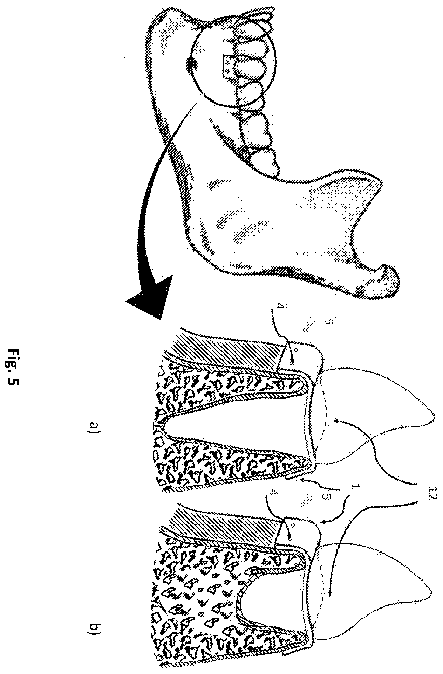

Figure 5 - Represents an embodiment of a single piece implant or integrated implant (12), anchored in the cortical bone constituting the socket of the newly extracted tooth (a) or tooth extracted some months or years before (b), with the flaps (1) and the screws (5) and their holes (4) through which the screws pass.

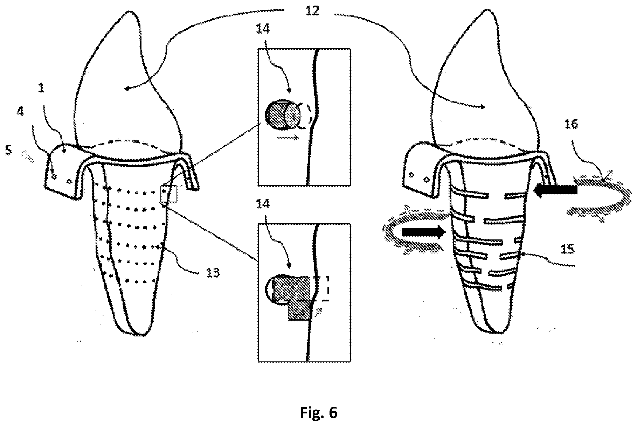

Figure 6 - Represents an embodiment of an integrated implant (12) with the flaps (1), the holes for the screws (4), the screws (5), and the holes (13) where the small cylinders or hooks (14), with shape memory material, will enter, or the grooves (15) where the rings (16), with shape memory material, will enter.
Figure 7 - An embodiment represents an integrated or one-piece implant wherein the surface thereof, in contact with the bone, has a cellular surface /mesh network surface(7), with mesh of channels (17) for improved vascularization along the surface of the implant, and platforms (18) for connection to the cortical bone.
Figure 8 - An embodiment of the dental implant of the present disclosure represents an integrated or one-piece implant wherein the surface thereof, in contact with the bone (8), has a cell surface (7), where the surface (a) is composed by interconnected channels (17) and platforms (or plateaux) (18) and interconnected network of channels (b)(19) inside which bone does not grow and the fluid may freely flow, with capillarity properties, and representative dimensions/geometries (c)(d) of said network of channels, platforms, and the space between space between platforms and the network of channels, with representative dimensions : 0.025mm<A(space between platforms and the network of channels)>0.4mm; B(network of channels width)>2*A; c(network of channels thickness<2*A), with different possible geometries, and the bone (e)(8) in contact with the platforms (e)(18) and, when under chewing forces (f)(20) the platform flaps deform (f)(21) inducing fluid flow (f)(22) inside the network of channels, thus promoting adequate vascularization along the whole implant-bone contact surface and over the implant life.

### DETAILED DESCRIPTION

The dental implant of the present disclosure is arranged to be fixed to the cortical bone and contains a cellular structured surface formed by elevated platforms forming a mesh network of under-channels between the platforms for improved implant lifetime vascularization.

In one embodiment, in order to enhance the fixation and implant lifetime vascularization, the implant of the present disclosure for fitting in an intraosseous zone of a dental socket comprising plurality of raised platforms with a flat top such that said tops form an external surface of the implant for contacting with the intraosseous zone and the spaces between said platforms form a network of channels for revascularisation fluid flow, surprisingly with capillarity properties.

In an embodiment, the network channels structure provides vascularization, which further have capillarity properties, over the entire implant surface in contact with bone, over the entire lifetime of the implant.

In an embodiment, plurality of raised platforms with a flat top may deform due to chewing forces.

The present disclosure describes a dental implant, which if supported on the cortical bone, and which may be subject to immediate loading. In particular, the implant will be implanted in the socket from which the tooth was extracted, if this hole still exists, or in the remaining socket when the tooth was extracted some time before, or alternatively in a hole made for placement of the implant, at cortical bone level, and externally, between the cortical bone and the gingiva, slightly embracing the mandible and the maxilla.

The present disclosure describes a dental implant that may be subject to immediate loading because it is firmly anchored in an area of cortical bone quite substantial.

The present disclosure describes a dental implant, which is anchored on the cortical bone, and which may be subject to immediate loading. In particular, the implant will be implanted in the socket from which the tooth was extracted, if this hole still exists, or alternatively in the remaining socket of a previous extracted tooth, or also in a hole made for placement of the implant, at the level of the cortical bone, and externally, between the cortical bone and the gingiva, slightly around the mandible and maxilla.

In one embodiment, in order to enhance the fixation, the implant may comprise screws that fasten to the maxilla / mandible the outside of the implant, and rings or parts that will fix the implantable part, that is, the part of the implant that enters the socket of the extracted tooth or in the hole made in the cortical bone, and includes an interface region of the implant with the bone having a cellular structure (7) that will allow and accelerate bone integration, including vascularization, additionally with capillarity properties, along the entire surface of the implant and over the entire implant life.

In one embodiment, according to Figures 4 and 5, it is possible to see that the flap (1) of the implant is supported on the cortical bone, hugging it. In addition, if there is no socket resulting from extraction of the tooth (Figure 1). the implant has a zone (2) that will enter a hole to be made in the cortical bone, there firmly attached (Figure 4). In addition, there are several holes (4) in the flap where small screws (5) will attach to the cortical bone.

In one embodiment, in the case of an extraction followed by implantation the implant may also comprise the equivalent of the tooth root (Figures 2, 5, and 6), which will fit in the socket left by the tooth root (Figure 5), being its geometry the closest possible to the extracted tooth socket. This part, which enters the socket of the root may contain outer rings (16) or small cylinders (14), made of shaped memory material, preferably Nitinol, and which when subjected to temperature will expand and create a strong bond with the cortical bone of the orifice. The rings may be about 0.4 to 2 mm thick and height and have a diameter that may range from 2 to 8 mm, while cylinders may be about 0.4 to 2 mm in diameter and 1 to 3 mm in height, both depending on the geometry of the implant and shall be of NiTi or other metal or alloy, or other material with shape memory effect so that it expands with temperature. Both the rings and the cylinders and the hooks shall be close at intervals equivalent to their own size, to provide a bone contacting surface of at least about 50% of the surface of the implant. This form of fixation, which prevents the implant from rotation to enter the socket or hole, allows the implant to have any geometry, such as the socket geometry of the extracted tooth, which allows it to be perfectly anchored in the cortical bone of the extracted tooth.

In one embodiment, because of the high rigidity of the fixation, it is possible to apply immediate loading, such as chewing. Three options are provided: the first (Figure 1a) and Figure 2a) where the implant contains a hole in its top (see (3) (Figure 3)) where the abutment will be threaded (see also (9) (Figure 4)) (simple implant) on which the crown will be mounted; the second (Figure 1b) and Figure 2b)) that consists of an implant that already contains the area of the abutment, on which the crown will be mounted; and the third (Figure 1c) and Figure 2c)) consisting of an integral implant in a single part, which already includes the abutment and the crown, in a single component.

In one embodiment, the interface zone of the implant with the bone has a cellular structure (7) that will allow and accelerate bone integration, including proper vascularization, with capillarity properties, over the entire surface of the implant and over the entire lifetime of the implant. In addition to this, the cellular structure will also allow to house bioactive or antibacterial materials which will allow for faster bone integration and healing. In the implant area that will enter the cortical bore, there are holes (13) or semi-circumferential grooves (15) for cylinders or hooks (14) or rings (16), made from a shaped memory material, preferably Nitinol. Rings and cylinders and hooks shall have an external surface with an irregular structure with roughness which allows a strong bond to bone and rapid bone-integration.

In one embodiment, once the implant is definitively placed, it should be applied temperature in the crown, which will diffuse into the intra-osseous zone. It will expand the cylinders, hooks, or rings, and will promote a contact load link between the implant and the bone. The screws (5) should also be placed on the flaps, and bolted to the cortical bone. The screws may have a length between 1 and 3 mm and a diameter between 0.5 and 2 mm.

In one embodiment, the flap (1) (Figure 5) of the implant allows the loads applied to the tooth give rise to stresses that are sufficiently distributed throughout the cortical bone, which will avoid areas of stress concentrations, normally existing on the superior and inferior cortical bone surfaces, in the per-implant region, in the conventional implants, resulting in a marked bone recession over time.

In one embodiment, the implant body as well as the accessory screws may be made of a metal or metal alloy, or metal matrix composite, based on titanium, or CoCrMo, or stainless steel, or other metal or alloy accepted for medical implants, or by a ceramic such as zirconia, alumina, or other accepted for medical implants, or ceramic compound, or by a polymer such as polyether ether ketone (PEEK), poly(methyl methacrylate) (PMMA), or other polymer accepted in medical implants, or polymeric composite, or mixtures thereof. Preferably it should be ceramic based on zirconia. The other accessories, namely expandable rings and cylinders, should be made of NiTi or other expandable material, accepted for medical implants. They should preferably be of Nitinol.

In one embodiment, as to the manufacturing process of the implants, and in both cases, the implants will be made according to the anatomy of each patient. Anatomical images of the bone should initially be obtained. With these the implants containing the flap that will embrace the cortical bone, and optionally the abutment and the crown, in the option of the integrated implant, will be manufactured. The manufacturing techniques are conventional, by CNC machining, or by additive/subtractive technologies, including laser ablation, among other conventional technologies.

The term "comprising" whenever used in this document is intended to indicate the presence of stated features, integers, steps, components, but not to preclude the presence or addition of one or more other features, integers, steps, components or groups thereof.

Furthermore, it is to be understood that the scope of the invention is defined by the wording of the claims.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

## Claims

1. Dental implant for fitting in an intraosseous zone of a dental socket comprising:
a plurality of raised platforms (18) with a flat top such that said tops form an external surface of the implant for contacting with the intraosseous zone and the spaces between and below said platforms form a network of channels (17, 19) for revascularisation fluid flow (22);
wherein the network of channels is a mesh of interconnected channels;
wherein the platforms have a 'T' shaped cross-section and
wherein the platforms have a central elevation crowned by a flat top comprising two tabs extending in two opposite directions.

2. Dental implant according to the previous claim wherein said external surface is a flat surface elevated from the implant.

3. Dental implant according to any of the previous claims wherein the platforms comprise lateral concave surfaces.

4. Dental implant according to any of the previous claims wherein the platforms have a flat top area that is shaped as a triangle, square, rhombus, hexagon, or combinations thereof.

5. Dental implant according to any of the previous claims wherein each tab has a triangular-shaped, square-shaped, rhombus-shaped, hexagon-shaped, top surface, or combinations thereof.

6. Dental implant according to any of the previous claims wherein the channels have a round, oval or rectangular cross-section.

7. Dental implant according to any of the previous claims where the space between said platforms is between 0.025 - 0.4 mm and/or the height of the channels varies between 0.05 - 0.8 mm and/or the width of cross-section of the channels varies between 0.05 - 0.8 mm and/or the length of platforms varies between 0.1-1.6 mm.

8. Dental implant according to any of the previous claims comprising an upper part wherein the upper part comprises at least two flaps (1) wherein said flaps comprise holes (4) for housing fastening means (5), preferably the external surface of the flaps comprises network of channels for revascularisation fluid flow described in the previous claims.

9. Dental implant according to any one of the preceding claims which comprises an internal central hole (3) capable of securing a post and / or a crown, preferably the central hole is threaded .

10. Dental implant according to any one of the preceding claims comprising a lower part of the implant having conical, frustoconical, frusto-cylindrical shape, preferably having the root shape of a tooth or of the tooth socket.

11. Dental implant according to any one of the preceding claims, comprising a plurality of recesses and / or protuberances (13, 15) able to receive expandable components (14, 16), preferably thermally expandable components.

12. Dental implant according to the preceding claim 11 wherein the thermally expandable components expand at temperatures between 40-50 ° C.

13. Dental implant according to any one of the preceding claims 11-12, wherein the expandable components have a diameter ranging from 0.4-2 mm and/or have a height ranging from 1-3 mm .

14. Dental implant according to any one of the preceding claims 11-13, wherein the expandable components are of shape memory material, preferably Nitinol.

15. Dental surgery kit comprising the dental implant described in any one of the preceding claims and expandable components described in the previous claims.

## Patentansprüche

1. Zahnimplantat zum Einsetzen in einen intraossäre Bereich eines Zahnfachs, umfassend:
eine Vielzahl von erhöhten Plattformen (18) mit einer flachen Oberseite, so dass die genannte Oberseiten eine äußere Oberfläche des Implantats für den Kontakt mit dem intraossären Bereich bilden und die Räume zwischen und unter den genannten Plattformen ein Netzwerk von Kanälen (17, 19) für den revaskularisierenden Flüssigkeitsstrom (22) bilden;
wobei das Netzwerk von Kanälen ein Netz von miteinander verbundenen Kanälen ist;
wobei die Plattformen einen T-förmigen Querschnitt aufweisen und
wobei die Plattformen eine mittige Erhebung aufweisen, die von einem flachen Aufsatz mit zwei sich in zwei entgegengesetzten Richtungen erstreckenden Laschen überkront wird.

2. Zahnimplantat nach dem vorangehenden Anspruch, wobei die genannte äußere Oberfläche eine flache Oberfläche ist, die sich vom Implantat abhebt.

3. Zahnimplantat nach einem der vorangehenden Ansprüche, wobei die Plattformen seitliche konkave Oberflächen aufweisen.

4. Zahnimplantat nach einem der vorangehenden Ansprüche, wobei die Plattformen einen flachen oberen Bereich haben, der als Dreieck, Quadrat, Rhombus, Sechseck oder Kombinationen davon geformt ist.

5. Zahnimplantat nach einem der vorangehenden Ansprüche, wobei jede der genannten Laschen bevorzugt eine dreieckige, quadratische, rautenförmige, sechseckige Oberseite oder Kombinationen davon aufweist.

6. Zahnimplantat nach einem der vorangehenden Ansprüche, wobei die Kanäle einen runden, ovalen oder rechteckigen Querschnitt aufweisen.

7. Zahnimplantat nach einem der vorangehenden Ansprüche, wobei der Abstand zwischen den genannten Plattformen zwischen 0,025 - 0,4 mm beträgt und/oder die Höhe der Kanäle zwischen 0,05 - 0,8 mm variiert und/oder die Breite des Querschnitts der Kanäle zwischen 0,05 - 0,8 mm variiert und/oder die Länge der Plattformen zwischen 0,1 - 1,6 mm variiert.

8. Zahnimplantat nach einem der vorangehenden Ansprüche, umfassend einen oberen Teil, wobei der obere Teil mindestens zwei Laschen (1) umfasst, wobei die genannten Laschen Öffnungen (4) zur Aufnahme von Befestigungsmitteln (5) umfassen, wobei die äußere Oberfläche der Laschen bevorzugt ein Netzwerk von Kanälen für den in den vorangehenden Ansprüchen beschriebenen revaskularisierenden Fluidfluss umfasst.

9. Zahnimplantat nach einem der vorangehenden Ansprüche, das eine innere mittige Öffnung (3) aufweist, das in der Lage ist, einen Stift und/oder eine Krone zu fixieren, wobei die mittige Öffnung bevorzugt mit einem Gewinde versehen ist.

10. Zahnimplantat nach einem der vorangehenden Ansprüche, umfassend einen unteren Teil des Implantats, der eine konische, kegelstumpfförmige oder kegelstumpfförmigzylindrische Form aufweist, bevorzugt die Wurzelform eines Zahns oder des Zahnfachs aufweist.

11. Zahnimplantat nach einem der vorangehenden Ansprüche, umfassend eine Vielzahl von Aussparungen und/oder Vorsprüngen (13, 15), die dehnbare Komponenten (14, 16), bevorzugt thermisch dehnbare Komponenten, aufnehmen können.

12. Zahnimplantat nach dem vorangehenden Anspruch 11, wobei sich die thermisch dehnbaren Komponenten bei Temperaturen zwischen 40-50 °C ausdehnen.

13. Zahnimplantat nach einem der vorangehenden Ansprüche 11-12, wobei die dehnbaren Komponenten einen Durchmesser von 0,4-2 mm und/oder eine Höhe von 1-3 mm aufweisen.

14. Zahnimplantat nach einem der vorangehenden Ansprüche 11-13, wobei die dehnbaren Komponenten aus einem Formgedächtnismaterial, bevorzugt Nitinol, bestehen.

15. Zahnchirurgisches Set, umfassend das in einem der vorangehenden Ansprüche beschriebene Zahnimplantat und die in den vorangehenden Ansprüchen beschriebenen dehnbaren Komponenten.

## Revendications

1. Implant dentaire destiné à être placé dans une zone intraosseuse d'une cavité dentaire comprenant :
une pluralité de plateformes élevées (18) avec une partie supérieure plate telle que lesdites parties supérieures forment une surface externe de l'implant pour être en contact avec la zone intraosseuse et les espaces entre et sous lesdites plateformes forment un réseau de canaux (17, 19) pour l'écoulement de fluide de revascularisation (22) ;
dans lequel le réseau de canaux est un maillage de canaux interconnectés ;
dans lequel les plateformes ont une section transversale en forme de « T » et
dans lequel les plateformes ont une élévation centrale couronnée par une partie supérieure plate comprenant deux languettes s'étendant dans deux directions opposées.

2. Implant dentaire selon la revendication précédente dans lequel ladite surface externe est une surface plate élevée à partir de l'implant.

3. Implant dentaire selon l'une quelconque des revendications précédentes dans lequel les plateformes comprennent des surfaces concaves latérales.

4. Implant dentaire selon l'une quelconque des revendications précédentes dans lequel les plateformes ont une zone supérieure plate en forme de triangle, carré, losange, hexagone, ou des combinaisons de ceux-ci.

5. Implant dentaire selon l'une quelconque des revendications précédentes dans lequel chaque languette a une surface supérieure en forme de triangle, carré, losange, hexagone, ou des combinaisons de ceux-ci.

6. Implant dentaire selon l'une quelconque des revendications précédentes dans lequel les canaux ont une section transversale ronde, ovale ou rectangulaire.

7. Implant dentaire selon l'une quelconque des revendications précédentes dans lequel l'espace entre lesdites plateformes est situé entre 0,025 et 0,4 mm et/ou la hauteur des canaux varie entre 0,05 et 0,8 mm et/ou la largeur de la section transversale des canaux varie entre 0,05 et 0,8 mm et/ou la longueur des plateformes varie entre 0,1 et 1,6 mm.

8. Implant dentaire selon l'une quelconque des revendications précédentes comprenant une partie supérieure dans lequel la partie supérieure comprend au moins deux clapets (1) dans lequel lesdits clapets comprennent des trous (4) pour recevoir des moyens de fixation (5), la surface externe des clapets comprenant préférablement un réseau de canaux pour l'écoulement de fluide de revascularisation décrit dans les revendications précédentes.

9. Implant dentaire selon l'une quelconque des revendications précédentes comprenant un trou central interne (3) apte à fixer un pivot et/ou une couronne, le trou central étant préférablement fileté.

10. Implant dentaire selon l'une quelconque des revendications précédentes comprenant une partie inférieure de l'implant ayant une forme conique, tronconique, cylindrique fruste, ayant préférablement la forme de la racine d'une dent ou de la cavité d'une dent.

11. Implant dentaire selon l'une quelconque des revendications précédentes, comprenant une pluralité de renfoncements et/ou protubérances (13, 15) capables de recevoir des composants expansibles (14, 16), préférablement des composants thermiquement expansibles.

12. Implant dentaire selon la revendication précédente 11, dans lequel les composants thermiquement expansibles s'élargissent à des températures situées entre 40 et 50 °C.

13. Implant dentaire selon l'une quelconque des revendications précédentes 11-12, dans lequel les composants expansibles ont un diamètre allant de 0,4 à 2 mm et/ou ont une hauteur allant de 1 à 3 mm.

14. Implant dentaire selon l'une quelconque des revendications précédentes 11-13, dans lequel les composants expansibles sont en matériau à mémoire de forme, préférablement le Nitinol.

15. Kit chirurgical dentaire comprenant l'implant dentaire décrit dans l'une quelconque des revendications précédentes et les composants expansibles décrits dans les revendications précédentes.
